# EUROPÄISCHE PATENTSCHRIFT

(11) **EP 1 832 164 B1**
(45) Veröffentlichungstag und Bekanntmachung des Hinweises auf die Patenterteilung: **03.07.2013**
(21) Anmeldenummer: 07001945.0
(22) Anmeldetag: 30.01.2007
(51) Int. Cl.: A01K 63/04

(54) **Aussenfiltereinrichtung für Aquarien mit einem im Kopfbereich aufgenommenen Grobfilter**
External filter device for aquarium with a coarse filter mounted in the upper zone
Dispositif de filtre extérieur pour aquarium doté d'un filtre grossier dans la zone de tête

(30) Priorität: 09.03.2006 DE 102006010839
(43) Veröffentlichungstag der Anmeldung: 12.09.2007
(73) Patentinhaber: JBL GmbH & Co. KG, 67141 Neuhofen (DE)
(72) Erfinder: Keppler, Rainer, Dr., 68766 Hockenheim (DE)
(74) Vertreter: Kesselhut, Wolf

(56) Entgegenhaltungen:
- EP-A- 1 321 031
- DE-A1- 3 434 678
- DE-U1- 20 115 493
- US-A1- 2003 205 512

## Beschreibung

Die Erfindung betrifft eine Außenfiltereinrichtung für Aquarien zum Reinigen von Wasser mit einem im Kopfbereich aufgenommenen Grobfilter gemäß dem Oberbegriff von Anspruch 1. Eine solche Außenfiltereinrichtung ist aus der DE-A-34 34 671 bekannt.

Auf dem Gebiet der Aquarien werden zum Ausfiltern von Verunreinigungen aus dem Aquariumwasser Außenfiltereinrichtungen eingesetzt, die ein außerhalb des Aquariums angeordnetes geschlossenes Filtergehäuse besitzen, in welchem ein Filterelement angeordnet ist, das vom Bodenbereich des Gehäuses aus von dem zu reinigenden Wasser durchströmt wird, welches über eine entsprechende Pumpe aus dem Aquarium abgesaugt und über einen im Kopfbereich des Gehäuses angeordneten Zulauf sowie einen im Gehäuse geführten Kanal dem Bodenbereich unterhalb des Filterelements zugeführt wird.

Bei derartigen Filtereinrichtungen, wie sie beispielsweise aus der DE 81 26 763 U1 bekannt sind, besteht das Problem, dass sich die zentral im Inneren des Gehäuses angeordneten Filterelemente nach Entfernen des Kopfteils nur nach oben hin aus dem Gehäuse entnehmen lassen, wobei das in den Filterelementen und im Gehäuse verbleibende Restwasser mit den darin gesammelten, im Bodenbereich konzentrierten Verschmutzungen von den Filterelementen abtropft, wodurch sich der Wechsel der Filterelemente in Wohnbereichen entsprechend aufwendig gestaltet.

Ein weiteres Problem besteht darin, dass die Filterelemente nacheinander von unten her nach oben hin durchströmt werden, was dazu führt, dass sich im untersten Filterelement in der Regel der meiste grobe Schmutz sammelt, und sich dieses vergleichsweise schnell zusetzt, wodurch die Intervalle zum Wechseln der Filterelemente nachteilig verkürzt werden.

Demgemäß ist es eine Aufgabe der vorliegenden Erfindung, eine Außenfiltereinrichtung zu schaffen, bei der die Intervalle zum Wechseln der Filterelemente zum Ausfiltern von Feinmaterial verlängert sind.

Diese Aufgabe wird erfindungsgemäß durch die Merkmale von Anspruch 1 gelöst.

Weitere Merkmale der Erfindung werden in den Unteransprüchen beschrieben.

Gemäß der Erfindung umfasst eine Außenfiltereinrichtung für Aquarien ein Gehäuse mit einem bodenseitigen Ende und einem kopfseitigen Ende, welches insbesondere nach Art eines nach oben geöffneten Gefäßes oder Bechers beispielsweise als Spritzgussteil aus Kunststoff gefertigt sein kann. Im unteren Teil des Gehäuses befindet sich wenigstens ein bevorzugt mittig angeordnetes Filterelement zum Ausfiltern von Feinmaterial aus dem Wasser, welches über einen im Bereich des kopfseitigen Endes des Gehäuses angeordneten Zulauf über einen oder mehrere Zuführkanäle in den Bodenbereich des Gehäuses eingeleitet wird, und von hier aus durch das Filterelement hindurch zu einem ebenfalls im Bereich des kopfseitigen Endes angeordneten Ablauf hin abgesaugt wird. Das Absaugen des Wassers kann hierbei in bekannter Weise über eine im Kopfbereich angeordnete elektrisch betriebene Pumpe, beispielsweise eine Axialpumpe, erfolgen.

Die erfindungsgemäße Außenfiltereinrichtung zeichnet sich dadurch aus, dass im Bereich des kopfseitigen Endes des Gehäuses wenigstens ein dem Zulauf zugeordneter Grobfilter aufgenommen ist, der dem Filterelement in Strömungsrichtung des über den Zulauf zugeführten Wassers betrachtet vorgeordnet ist.

Durch den Einsatz eines solchen Grobfilters zum Ausfiltern von groben Verunreinigungen wie Pflanzenteilen, Sand, Futterresten oder sonstigen gröberen Verunreinigungen mit einer Größe von beispielsweise 1 bis 5 mm, ergibt sich der Vorteil, dass das dem Grobfilter nachgeordnete Feinfilterelement zum Ausfiltern von Feinmaterial bzw. zum Entfernen von biologischen Verunreinigungen durch Mikroorganismen, erheblich seltener gereinigt werden muss, was den im Filterelement bekannter Maßen enthaltenen Bakterienkulturen für die biologische Reinigung zugute kommt, da diese für einen erheblich längeren Zeitraum ungestört im Filterelement verbleiben können.

Ein weiterer Vorteil der erfindungsgemäßen Außenfiltereinrichtung besteht darin, dass die Grobfilter in Hinblick auf die Art des Filtermaterials sowie auch die Porengröße vergleichsweise variabel sind, da diese lediglich zum Ausfiltern von groben Verunreinigungen aus dem Aquariumwasser dienen und hierdurch keinerlei speziellen biologisch neutralen Materialeigenschaften aufweisen müssen, die insbesondere beim Einsatz von wasserreinigenden Mikroorganismen erforderlich sind.

So kann der Grobfilter im einfachsten Falle beispielsweise aus Fasermatten oder einem schwammartigen Kunststoffmaterial, wie z.B. geschäumtem Polyether, bestehen, welches in unterschiedlichsten Ausgestaltungen und Porengrößen, z.B. Porengrößen zwischen 10 und 40 PPI (Pores per Inch) als kostengünstige Massenware erhältlich ist.

In der erfindungsgemäßen Außenfiltereinrichtung ist im Bereich des kopfseitigen Endes des Gehäuses wenigstens ein Aufnahmefach für den Grobfilter vorgesehen, das bevorzugt zusammen mit einer flüssigkeitsdichten Trennwand zur Unterteilung des Kopfbereichs in einen dem Ablauf zugeordneten Ablaufbereich sowie einen dem Zulauf zugeordneten Zulaufbereich in einem Formteil gebildet ist. Das Formteil kann dabei insbesondere als Kunststoffspritzgussteil ausgestaltet sein, welches bevorzugt in den Kopfbereich des Gehäuses eingesetzt und über entsprechende rippenartige Vorsprünge in diesem fixiert wird.

Hierbei ist der Ablaufbereich bevorzugt mittig im Gehäuse, bzw. im Formteil angeordnet, wohingegen das Aufnahmefach für den Grobfilter bevorzugt durch die flüssigkeitsdichte Trennwand getrennt seitlich des Ablaufbereichs geformt ist. Durch diese Ausgestaltung der Erfindung ergibt sich der Vorteil, dass das Filterelement zum Ausfiltern des Feinmaterials in Form von mehreren übereinander angeordneten Filtereinheiten in einem säulenartigen Innengehäuse aufgenommen werden kann, welches wiederum von oben her entnehmbar innerhalb des Gehäuses am Boden desselben platziert werden kann. Hierbei können durch seitlich am säulenförmigen Innengehäuses vorgesehene rippenartige Abstandshalter in konstruktiv einfacher Weise Kanäle definiert werden, über die das durch den Grobfilter vorgefilterte Wasser außerhalb des säulenartigen Innengehäuses in den Bodenbereich eingeleitet wird, um den Feinfilter von unten her zu durchströmen.

Der Grobfilter ist hierbei bevorzugt lediglich von oben her in das Aufnahmefach eingelegt, so dass nach Abnehmen eines das Gehäuse nach oben hin abschließenden Kopfteils, in welchem bevorzugt der Zulauf, der Ablauf und auch die Pumpe zum Absaugen des Wassers aus dem Filterelement, sowie ggf. auch eine Handpumpe zum manuellen Ansaugen von Wasser aus dem Aquarium vor der Inbetriebnahme der Pumpe angeordnet sind, der Grobfilter von oben her frei zugänglich ist.

Durch diese Ausführungsform der Erfindung ergibt sich der Vorteil, dass der Grobfilter sehr schnell nach Abnehmen des Kopfteils aus dem Aufnahmefach entnommen werden kann, wobei die Oberseite des Grobfilters vorzugsweise unterhalb der Oberkante des Gehäuses liegt, so dass im Gehäuse enthaltenes Wasser auch nach Abnehmen des Kopfteils im Gehäuse verbleibt und nicht über die Gehäusewand hinweg abläuft. Anders ausgedrückt lassen sich der Grobfilter oder - sofern weitere Aufnahmefächer mit einem oder mehreren weiteren Grobfiltern insbesondere im Formteil angeordnet sind - auch die weiteren Grobfilter mit wenigen Handgriffen und ohne einen Austritt von Wasser aus dem Gehäuse entnehmen, um diese zu reinigen und/oder austauschen.

Das Kopfteil ist nach dem Aufsetzen auf das kopfseitige Ende des Gehäuses über eine Arretiereinrichtung flüssigkeitsdicht auf dem Gehäuse fixierbar, so dass die Außenfiltereinrichtung als eine geschlossene Einheit außerhalb des Aquariums platziert werden kann. Die Arretiereinrichtung kann beispielsweise zwei oder mehrere seitlich auf die Außenseite des Gehäuses wirkende Klemmeinrichtungen oder Schnellspanneinrichtungen umfassen, welche formschlüssig in das Gehäuse, bzw. das Kopfteil eingreifen.

Um eine optische Überprüfung des Verschmutzungszustandes des oder der Grobfilter, bzw. auch der Filterelemente zum Ausfiltern von Feinmaterial zu ermöglichen, können das Gehäuse sowie auch das säulenartige Innengehäuse aus einem transparenten oder transluzenten Werkstoff, insbesondere Kunststoff, gefertigt sein.

Die Erfindung wird nachfolgend mit Bezug auf die Zeichnungen anhand von bevorzugten Ausführungsformen beschrieben.

In den Zeichnungen zeigen:
- Fig. 1: eine schematische Querschnittsansicht der erfindungsgemäßen Außenfiltereinrichtung mit einem durch Pfeile angedeuteten Strömungsverlauf des durch die Einrichtung hindurchströmenden Wassers, und
- Fig. 2: eine schematische räumliche Darstellung des Formteils zur Verdeutlichung der Anordnung des mittig angeordneten Ablaufbereichs sowie des durch flüssigkeitsdichte Trennwände davon getrennten Zulaufbereichs mit den daran geformten Aufnahmefächern für die Grobfilter.

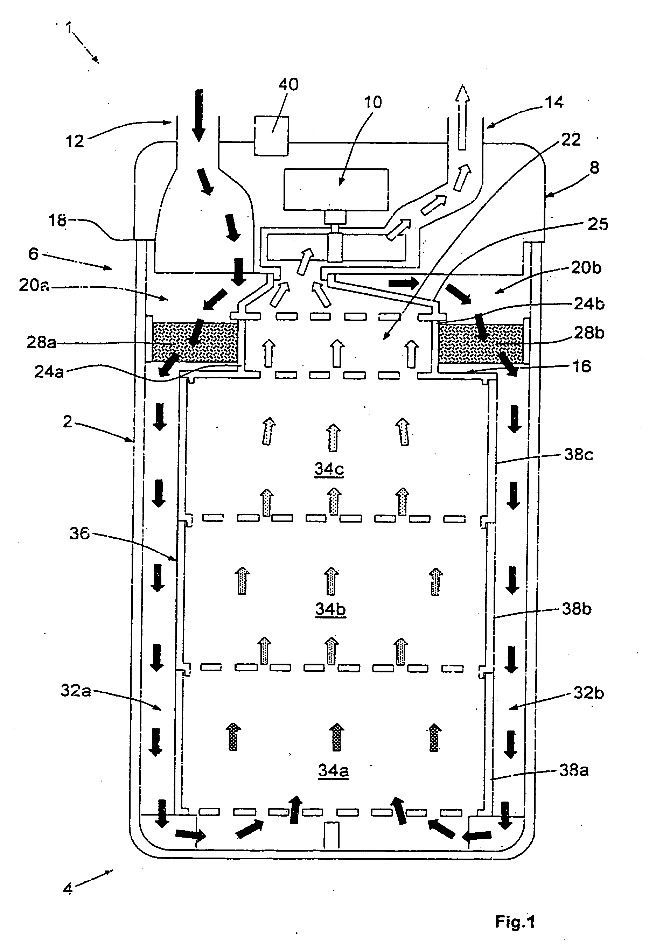

Wie in Fig. 1 gezeigt ist, umfasst eine erfindungsgemäße Außenfiltereinrichtung 1 ein Gehäuse 2 mit einem bodenseitigen Ende 4 und einem kopfseitigen Ende 6, welches im Bereich des kopfseitigen Endes 6 durch ein Kopfteil 8 flüssigkeitsdicht verschlossen wird. Im Kopfteil 8 sind eine elektrisch betriebene Pumpe 10 sowie ein Zulauf 12 für zu reinigendes Wasser und einen Ablauf 14 für das durch die erfindungsgemäße Filtereinrichtung gereinigte Wasser aufgenommen, die über nicht näher gezeigte Schläuche mit dem ebenfalls nicht näher gezeigten Aquarium in Strömungsverbindung stehen.

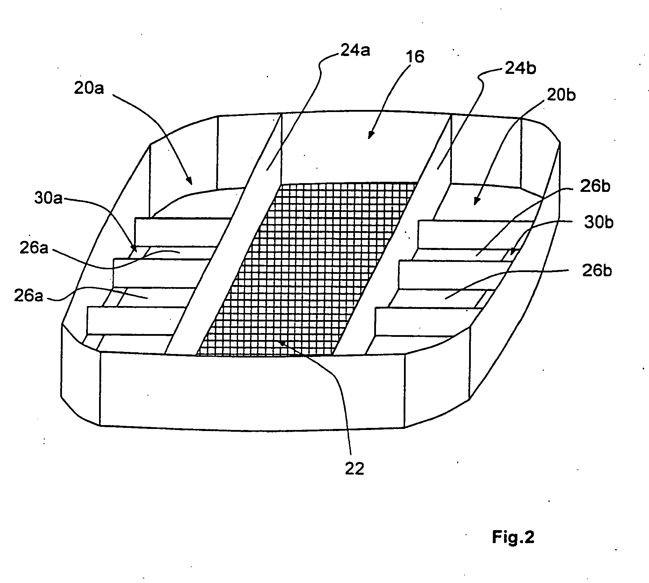

Wie der Darstellung von Fig. 1 weiterhin entnommen werden kann, ist im Bereich des kopfseitigen Endes 6 ein in Fig. 2 im Detail gezeigtes Formteil 16 unterhalb der oberen Ränder 18 des Gehäuses 2 angeordnet, in welchem ein dem Zulauf 12 zugeordneter Zulaufbereich 20a, 20b sowie ein mittig zu diesem angeordneter Ablaufbereich 22 definiert ist, der durch eine erste und zweite flüssigkeitsdichte Trennwand 24a, 24b von dem, bzw. den Zulaufbereichen 20a, 20b getrennt wird.

Die Zufuhr des verunreinigten Wassers vom Zulauf 12 aus zum Zulaufbereich 20b, sowie auch zum Zulaufbereich 20a hin kann beispielsweise über in den Zeichnungen nicht näher dargestellte Kanäle erfolgen, die innerhalb des Kopfteils 8 geformt sind.

Der Ablaufbereich 22 ist nach oben hin durch ein in Fig. 1 angedeutetes Abdeckelement 25 verschlossen, welches lediglich im Bereich der Ansaugöffnung der Pumpe 10 mit einem in Fig. 1 nicht näher bezeichneten Durchlass versehen ist, so dass nach Aufsetzen des Kopfteils 8 auf das Gehäuse 2 eine flüssigkeitsdichte Verbindung zwischen dem Einlass der Pumpe 10 und dem Ablaufbereich 22 erzeugt wird, über die gereinigtes Wasser vom Ablaufbereich zum Auslass 14 gefördert werden kann.

Wie der Querschnittsdarstellung von Fig. 1 sowie der schematisch räumlichen Darstellung des Formteils 16 von Fig. 2 weiterhin entnommen werden kann, sind im Formteil 16 im Bereich der Zulaufbereiche 20a, 20b Aufnahmefächer 26a, 26b gebildet, in denen zugehörige Grobfilter oder Grobfilterelemente 28a, 28b aufgenommen sind, welche das über den Zulauf 12 zugeführte Aquariumwasser von groben Verunreinigungen wie Pflanzenresten, Sand und dergleichen grob reinigen.

Im Bereich des Bodens der Aufnahmefächer 26a, 26b sind bevorzugt am unteren Ende der äußeren Seitenwände der Aufnahmefächer schlitzförmige Öffnungen 30a, 30b gebildet, über die das durch die Grobfilter 28a, 28b hindurchtretende vorgereinigte Wasser in nachgeordnete vertikale seitliche Kanäle 32a, 32b eintreten kann, die im Bereich der Innenwand des Gehäuses 2, beispielsweise durch nicht näher bezeichnete rippenförmige Abstandshalter definiert sind.

Wie der Darstellung von Fig. 1 weiterhin entnommen werden kann, ist im unteren Teil des Gehäuses 2 bevorzugt zentriert in der Mitte desselben ein Filterelement 34 zum Ausfiltern von Feinmaterial aus dem vorgereinigten Wasser angeordnet, das - wie durch die Pfeile angedeutet - vom vorgefilterten Wasser zum kopfseitigen Ende 6 des Gehäuses 2 hin durchströmt wird.

Um eine bessere Filterwirkung zu erhalten, sind bevorzugt mehrere einzelne Filterelemente 34a, 34b 34c mit bevorzugt unterschiedlichen Filtereigenschaften in einem säulenartigen Innengehäuse 36 übereinander angeordnet, wobei an der bevorzugt im Wesentlichen flüssigkeitsdichten Außenseite des säulenartigen Innengehäuses 36 nicht näher bezeichnete rippenförmige Abstandshalter vorgesehen sein können, die für eine zentrierte Aufnahme des Innengehäuses 36 im Gehäuse 2 sorgen und hierdurch die Kanäle 32a, 32b definieren.

Das säulenartige Innengehäuse 36 besteht bevorzugt aus mehreren Einsätzen 38a, 38b, 38c, die jeweils nicht näher bezeichnete, mit Durchtrittsöffnungen versehene Zwischenböden aufweisen, und die über entsprechend ausgestaltete Nuten im Bodenbereich eines jeden Einsatzes auf den oberen Rand eines darunter liegenden Einsatzes unter Erzeugung einer im Wesentlichen flüssigkeitsdichten Verbindung aufsetzbar sind. Durch diese Ausgestaltung der Erfindung ergibt sich der Vorteil, dass unterschiedliche Filtermaterialien für die in den Einsätzen 38a, 38b, 38c enthaltenden Filterelemente 34a, 34b, 34c zum Einsatz gelangen können, die nach dem Auseinanderziehen der zugehörigen Einsätze einzeln ausgetauscht oder gereinigt werden können, ohne das gesamte Filterelement 34 zu zerlegen.

Schließlich kann es vorgesehen sein, dass im Kopfteil 8 eine in Fig. 1 aus darstellungstechnischen Gründen lediglich schematisch durch den Druckknopf 40 angedeutete manuelle Pumpeinrichtung 40 vorgesehen ist, die beispielsweise über entsprechende Rückschlagventile durch Betätigen eines entsprechenden Pumpenkolbens ein Ansaugen von Aquariumwasser über den Zulauf 12 ermöglicht, um beim Einsatz einer kostengünstigen nicht selbst ansaugenden Pumpe 10 das Gehäuse 2 mit Wasser zu befüllen.

### Liste der Bezugszeichen

- 1: Außenfiltereinrichtung
- 2: Gehäuse
- 4: bodenseitiges Ende
- 6: kopfseitiges Ende
- 8: Kopfteil
- 10: Pumpe
- 12: Zulauf
- 14: Ablauf
- 16: Formteil
- 18: oberer Rand des Gehäuses
- 20a, b: Zulaufbereich
- 22: Ablaufbereich
- 24a, b: Trennwand
- 25: Abdeckelement
- 26a, b: Aufnahmefach
- 28a, b: Grobfilter
- 30a, b: Schlitze/Ablauföffnungen
- 32a, b: seitliche Kanäle
- 34a, b, c: Filterelemente
- 36: säulenartiges Innengehäuse
- 38a, b, c: Einsätze
- 40: manuelle Pumpeinrichtung

## Patentansprüche

1. Außenfiltereinrichtung (1) für Aquarien, mit einem ein bodenseitiges Ende (4) und ein kopfseitiges Ende (6) aufweisenden Gehäuse (2), in welchem ein Zulauf (12) für verunreinigtes Wasser und ein Ablauf (14) für gereinigtes Wasser vorgesehen sind, und in welchem wenigstens ein Filterelement (34a, 34b, 34c) angeordnet ist, das von dem verunreinigten Wasser zum Ausfiltern von Feinmaterial vom bodenseitigen Ende (4) aus zum kopfseitigen Ende (6) hin durchströmt wird, wobei im Bereich des kopfseitigen Endes (6) des Gehäuses (2) ein dem Zulauf (12) zugeordneter Grobfilter (28a, 28b) aufgenommen ist, der dem Filterelement (34a, 34b, 34c) strömungsmäßig vorgeordnet ist,
**dadurch gekennzeichnet,**
**dass** das kopfseitige Ende (6) durch ein Kopfteil (8), welches zur Erzeugung einer flüssigkeitsdichten Verbindung über eine Arretiereinrichtung lösbar am Gehäuse (2) befestigt ist, flüssigkeitsdicht verschließbar ist, und dass im Bereich des kopfseitigen Endes (6) des Gehäuses (2) wenigstens ein Aufnahmefach (26a, 26b) für den Grobfilter (28a, 28b) vorgesehen ist, in welchem der Grobfilter vom kopfseitigen Ende (6) aus zugänglich aufgenommen ist.

2. Außenfiltereinrichtung nach Anspruch 1,
**dadurch gekennzeichnet,**
**dass** im Bereich des kopfseitigen Endes (6) eine flüssigkeitsdichte Trennwand (24a, 24b) vorgesehen ist, die den Bereich des kopfseitigen Endes (6) in einen dem Ablauf (14) zugeordneten Ablaufbereich (22) und einen dem Zulauf (12) zugeordneten Zulaufbereich (20a, 20b) unterteilt, in welchem der Grobfilter (28a, 28b) aufgenommen ist.

3. Außenfiltereinrichtung nach Anspruch 2,
**dadurch gekennzeichnet,**
**dass** im Bereich des kopfseitigen Endes (6) des Gehäuses (2) ein Formteil (16) angeordnet ist, in welchem das Aufnahmefach (26a, 26b) für den Grobfilter (28a, 28b) und die flüssigkeitsdichte Trennwand (24a, 24b) definiert sind.

4. Außenfiltereinrichtung nach einem der Ansprüche 2 oder 3,
**dadurch gekennzeichnet,**
**dass** das Filterelement (34a, 34b, 34c) unterhalb des Ablaufbereichs (22) angeordnet ist und sich im Gehäuse (2) im Wesentlichen mittig vom bodenseitigen Ende (4) aus zum kopfseitigen Ende (6) hin erstreckt, und dass der Zulaufbereich (20a, 20b) seitlich des Ablaufbereichs (22) angeordnet ist.

5. Außenfiltereinrichtung nach einem der Ansprüche 2 bis 4,
**dadurch gekennzeichnet,**
**dass** im Zulaufbereich (22a, 22b) wenigstens ein weiteres Aufnahmefach (26a, 26b) zur Aufnahme eines weiteren Grobfilters (28a, 28b) angeordnet ist, das über eine weitere flüssigkeitsdichte Trennwand (24a, 24b) vom Aufnahmefach (26a, 26b) getrennt ist und von oben her mit dem zu filternden Wasser beaufschlagt wird.

6. Außenfiltereinrichtung nach einem der vorhergehenden Ansprüche,
**dadurch gekennzeichnet,**
**dass** im Boden des Aufnahmefachs (26a, 26b) für den Grobfilter (28a, 28b) wenigstens eine Ablauföffnung (30a, 30b) vorgesehen ist, über die das Wasser nach Passieren des Grobfilters zum bodenseitigen Ende (4) des Gehäuses (2) hin geleitet wird.

7. Außenfiltereinrichtung nach einem der vorhergehenden Ansprüche,
**dadurch gekennzeichnet,**
**dass** das Filterelement (34a, 34b, 34c) in einem im Gehäuse (2) enthaltenen säulenförmigen Innengehäuse (36) aufgenommen ist.

8. Außenfiltereinrichtung nach Anspruch 7,
**dadurch gekennzeichnet,**
**dass** das säulenförmige Innengehäuse (36) zwei oder mehrere, im Bodenbereich mit Durchtrittsöffnungen für das aufsteigende Wasser versehene Einsätze (38a, 38b, 38c) aufweist, in welchen jeweils ein separates Filterelement (34a, 34b, 34c) zum Ausfiltern von Feinmaterial angeordnet ist.

9. Außenfiltereinrichtung nach einem der vorhergehenden Ansprüche,
**dadurch gekennzeichnet,**
**dass** das Gehäuse (2) und/oder das säulenartige Innengehäuse (36) zumindest teilweise aus einem durchsichtigen Werkstoff, insbesondere transparentem oder transluzentem Kunststoff, besteht.

10. Außenfiltereinrichtung nach einem der vorhergehenden Ansprüche,
**dadurch gekennzeichnet,**
**dass** das Kopfteil (8) eine Pumpe (10) zum Fördern des gereinigten Wassers zum Ablauf (14) enthält.

## Claims

1. External filter device (1) for aquariums with a housing (2) comprising a bottom end (4) and a top end (6) in which housing an inlet (12) is provided for contaminated water and an outlet (14) for decontaminated water, and in which at least one filter element (34a, 34b, 34c) is arranged, through which the contaminated water flows from the bottom end (4) to the top end (6) to filter out fine material, whereby in the area of the top end (6) of the housing (2) a coarse filter (28a, 28b) associated with the inlet (12) is fitted, which coarse filter is arranged upstream of the filter element (34a, 34b, 34c),
**characterised in that,**
the top end (6) can be closed to be watertight by a head part (8) which is detachably secured to the housing (2) to create a watertight connection by means of a locking device, and that, in the area of the top end (6) of the housing (2) at least one containing compartment (26a, 26b) is provided for the coarse filter (28a, 28b) in which the coarse filter is contained to be accessed from the top end (6).

2. External filter device in accordance with claim 1,
**characterised in that,**
in the area of the top end (6) a watertight partition (24a, 24b) is provided which divides the area of the top end (6) into an outlet area (22) associated with the outlet (14) and an inlet area (20a, 20b) associated with the inlet (12) in which the coarse filter (28a, 28b) is contained.

3. External filter device in accordance with claim 2,
**characterised in that,**
in the area of the top end (6) of the housing (2) a shaped part (16) is arranged in which the containing compartment (26a, 26b) for the coarse filter (28a, 28b) and the watertight partition (24a, 24b) are defined.

4. External filter device in accordance with one of the claims 2 or 3,
**characterised in that,**
the filter element (34a, 34b, 34c) is arranged under the outlet area (22) and extends in the housing (2) essentially centrally from the bottom end (4) to the top end (6) and that the inlet area (20a, 20b) is arranged to the side of the outlet area (22).

5. External filter device in accordance with one of the claims 2 to 4,
**characterised in that,**
in the inlet area (22a, 22b)¹ at least one further containing compartment (26a, 26b) to contain a further coarse filter (28a, 28b) is arranged which is separated from the containing compartment (26a, 26b) by a further watertight partition (24a, 24b) and which is impinged from above by the water to be filtered.

6. External filter device in accordance with one of the foregoing claims,
**characterised in that,**
on the floor of the containing compartment (26a, 26b) for the coarse filter (28a, 28b), at least one outlet hole (30a, 30b) is provided through which the water is directed after passing through the coarse filter towards the bottom end (4) of the housing (2).

7. External filter device in accordance with one of the foregoing claims,
**characterised in that,**
the filter element (34a, 34b, 34c) is contained in an inner columnar housing (36) contained in housing (2).

8. External filter device in accordance with claim 7,
**characterised in that,**
the inner columnar housing (36) comprises two or more inserts (38a, 38b, 38c) provided in the floor area with apertures through which the rising water can pass, in each of which a separate filter element (34a, 34b, 34c) is arranged to filter out fine material.

9. External filter device in accordance with one of the foregoing claims,
**characterised in that,**
the housing (2) and/or the inner columnar housing (36) consist(s) at least partially of a clear material, in particular a transparent or translucent plastic.

10. External filter device in accordance with one of the foregoing claims,
**characterised in that,**
the head part (8) contains a pump (10) to propel the decontaminated water to the outlet (14).

## Revendications

1. Dispositif de filtre extérieur (1) pour aquarium, comprenant un boîtier (2) comportant une extrémité côté fond (4) et une extrémité côté tête (6), dans lequel sont prévues une arrivée (12) pour l'eau polluée et une évacuation (14) pour l'eau purifiée et dans lequel est disposé au moins un élément filtrant (34a, 34b, 34c) qui est parcouru par l'eau polluée depuis l'extrémité côté fond (4) vers l'extrémité côté tête (6) afin d'éliminer par filtrage des matériaux fins, un filtre grossier (28a, 28b) associé à l'arrivée (12), monté en amont de l'élément filtrant (34a, 34b, 34c) en termes d'écoulement, étant logé dans la zone de l'extrémité côté tête (6) du boîtier (2),
**caractérisé en ce que**
l'extrémité côté tête (6) peut être fermée de manière étanche aux liquides par une pièce de tête (8), fixée sur le boîtier (2) de manière amovible au moyen d'un dispositif de blocage afin de créer une liaison étanche aux liquides, et **en ce qu'**au moins un compartiment de réception (26a, 26b) pour le filtre grossier (28a, 28b) est prévu dans la zone de l'extrémité côté tête (6) du boîtier (2), dans lequel le filtre grossier est logé avec possibilité d'accès depuis l'extrémité côté tête (6).

2. Dispositif de filtre extérieur selon la revendication 1,
**caractérisé en ce que**
une paroi de séparation étanche aux liquides (24a, 24b) est prévue dans la zone de l'extrémité côté tête (6), qui divise ladite zone de l'extrémité côté tête en une zone d'évacuation (22) associée à l'évacuation (14) et une zone d'arrivée (20a, 20b) associée à l'arrivée (12), dans laquelle le filtre grossier (28a, 28b) est logé.

3. Dispositif de filtre extérieur selon la revendication 2,
**caractérisé en ce que**
une pièce moulée (16) est disposée dans la zone de l'extrémité côté tête (6) du boîtier (2), dans laquelle le compartiment de réception (26a, 26b) pour le filtre grossier (28a, 28b) et la paroi de séparation étanche aux liquides (24a, 24b) sont définis.

4. Dispositif de filtre extérieur selon l'une des revendications 2 ou 3,
**caractérisé en ce que**
l'élément filtrant (34a, 34b, 34c) est disposé au-dessous de la zone d'évacuation (22) et s'étend dans le boîtier (2), de manière sensiblement centrée, depuis l'extrémité côté fond (4) vers l'extrémité côté tête (6), et **en ce que** la zone d'arrivée (20a, 20b) est disposée sur le côté de la zone d'évacuation (22).

5. Dispositif de filtre extérieur selon l'une des revendications 2 à 4,
**caractérisé en ce que**
au moins un autre compartiment de réception (26a, 26b) destiné à recevoir un autre filtre grossier (28a, 28b) est disposé dans la zone d'arrivée (22a, 22b), qui est séparé du compartiment de réception (26a, 26b) par une autre paroi de séparation étanche aux liquides (24a, 24b) et qui reçoit l'eau à filtrer par le haut.

6. Dispositif de filtre extérieur selon l'une des revendications précédentes,
**caractérisé en ce que**
au moins une ouverture d'évacuation (30a, 30b) est prévue dans le compartiment de réception (26a, 26b) pour le filtre grossier (28a, 28b), à travers laquelle l'eau, après avoir passé le filtre grossier, est dirigée vers l'extrémité côté fond (4) du boîtier (2).

7. Dispositif de filtre extérieur selon l'une des revendications précédentes,
**caractérisé en ce que**
l'élément filtrant (34a, 34b, 34c) est logé dans un boîtier intérieur en forme de colonne (36) contenu dans le boîtier (2).

8. Dispositif de filtre extérieur selon la revendication 7,
**caractérisé en ce que**
le boîtier intérieur en forme de colonne (36) comporte deux ou plusieurs éléments d'insertion (38a, 38b, 38c) ayant au niveau du fond des ouvertures de passage pour l'eau montante, dans lesquels est placé respectivement un élément filtrant séparé (34a, 34b, 34c) destiné à éliminer par filtrage des matériaux fins.

9. Dispositif de filtre extérieur selon l'une des revendications précédentes,
**caractérisé en ce que**
le boîtier (2) et/ou le boîtier intérieur en forme de colonne (36) est constitué au moins partiellement d'un matériau transparent, en particulier d'une matière plastique transparente ou translucide.

10. Dispositif de filtre extérieur selon l'une des revendications précédentes,
**caractérisé en ce que**
la pièce de tête (8) contient une pompe (10) destinée à transporter l'eau purifiée vers l'évacuation (14).
